# EUROPÄISCHE PATENTSCHRIFT

(11) **EP 3 091 622 B1**
(45) Veröffentlichungstag und Bekanntmachung des Hinweises auf die Patenterteilung: **08.07.2020**
(21) Anmeldenummer: 16165191.4
(22) Anmeldetag: 13.04.2016
(51) Int. Cl.: H02G 1/12, B26B 29/02

(54) **KLINGENSCHUTZ FÜR EINE HAKENKLINGE EINES KABELMESSERS**
BLADE GUARD FOR A HOOKED BLADE OF A CABLE KNIFE
PROTECTION DE LAME POUR UNE LAME CROCHET D'UN COUTEAU A OUVRIR LES GAINES

(30) Priorität: 06.05.2015 DE 102015107022
(43) Veröffentlichungstag der Anmeldung: 09.11.2016
(73) Patentinhaber: KRAMPE Immobilien GmbH & Co. KG, 59387 Ascheberg (DE)
(72) Erfinder: Bünnigmann, Carsten, 59387 Ascheberg (DE)
(74) Vertreter: Straube, Urs Norman

(56) Entgegenhaltungen:
- DE-A1- 1 440 878
- DE-U1- 29 908 858
- US-A- 4 757 612

## Beschreibung

Die Erfindung bezieht sich auf einen Klingenschutz für ein Kabelmesser mit einem Gehäuse als Griff und einer an einer Stirnseite des Gehäuses heraus ragenden Hakenklinge, die durch eine Schutzhülle sicherbar ist.

Kabelmesser werden zum Abmanteln eines Kabelendes genutzt. Dazu ist oft auch eine Hakenklinge vorgesehen, die insbesondere dann genutzt wird, wenn der Kabelmantel dicker oder recht steif ist. Die Hakenklinge wird am Kabelende so an den Kabelmantel angesetzt, dass der Haken unter den Kabelmantel greift und nun durch Ziehen der Hakenklinge ein Längsschnitt in den Kabelmantel ausgeführt wird. Danach lässt sich der Kabelmantel am Kabelende leicht entfernen.

Bei der Benutzung von Hakenklingen ist bei einem Abrutschen vom Kabelmantel ein Verletzungsrisiko gegeben. Um dieses weitgehend zu vermeiden ist es erforderlich, einen Klingenschutz für die Hakenklinge vorzusehen.

Bei bekannten Kabelmessern wird der Klingenschutz dadurch realisiert, dass die Hakenklinge in der Sicherungsstellung in das Gehäuse zurückgezogen wird. Dann geht von der Hakenklinge bei der Benutzung mit weiteren Klingen am Kabelmesser keine Gefahr aus. Bei einem Längsschnitt mit der Hakenklinge besteht das Verletzungsrisiko aber weiterhin.

Ein entsprechendes Kabelmesser ist in der europäischen Patentanmeldung EP 1 887 669 B1 beschrieben. Das dort gezeigte Kabelentmantelungswerkzeug weist die Schlitzklinge, einen federbelasteten Spannbügel und auch eine Hakenklinge auf.

Die Hakenklinge ist verschieblich im Gehäuse gelagert und wird bei Bedarf aus dem Gehäuse herausgeschoben. Durch die verschiebliche Lagerung hat die Hakenklinge keinen festen Sitz am Gehäuse, was die Führung der Hakenklinge beim Schneiden des Kabelmantels beeinträchtigt und das Verletzungsrisiko vergrößert. Es wird hier mit einem Einrastmechanismus gearbeitet, wo die Klinge nicht wieder hereinfährt. Die Druckschrift DE29908858 U1 offenbart einen Klingenschutz für ein Messer mit einer am Gehäuse befestigten Messerklinge und einem in das Gehäuse ein- und ausfahrbaren Sicherheitsbügel, der in einer Sicherungsstellung einer Bedienungstaste die Messerklinge im ausgefahrenen Zustand abdeckt. Durch Drücken der Bedienungstaste wird der Sicherheitsbügel entriegelt und kann gegen eine Federkraft in das Gehäuse geschoben werden, wodurch die Messerklinge frei liegt und zum Schneiden benutzbar ist.

Es ist die Aufgabe der Erfindung, einen Klingenschutz für die Hakenklinge eines Kabelmessers vorzuschlagen, bei dem das Verletzungsrisiko minimiert ist.

Diese Aufgabe wird durch einen Klingenschutz gemäß Anspruch 1 gelöst. Vorteilhafte Ausgestaltungen sind in den abhängigen Ansprüchen angegeben.

Der Klingenschutz ist für ein Kabelmesser mit einem Gehäuse als Griff vorgesehen und einer an einer Stirnseite des Gehäuses heraus ragenden Hakenklinge, die durch eine Schutzhülle sicherbar ist.

Der Klingenschutz zeichnet sich dadurch aus, dass die Hakenklinge feststehend am Gehäuse befestigt ist und die Schutzhülle in einer Sicherungsstellung mittels eines Sicherungsschiebers als Riegel sichernd über der Hakenklinge gehalten ist. Die Schutzhülle ist dabei in einer Arbeitsstellung gegen eine Federkraft in das Gehäuse hinein verschieblich und geht bei einem Hervorspringen der Schutzhülle wieder selbsttätig in die Sicherungsstellung über.
Wenn also bei einem Schnitt mit der Hakenklinge in einen Kabelmantel diese davon abrutscht und der Widerstand des Kabelmantels gegen die Federkraft der Schutzhülle fehlt, springt diese selbsttätig hervor und sichert die Hakenklinge. Sobald die Schutzhülle die Hakenklinge überdeckt, geht von dieser kein Verletzungsrisiko mehr aus. Die wieder eingenommene Sicherungsstellung blockiert dann die Schutzhülle.

Die Federkraft für die Schutzhülle wird über eine Schutzfeder aufgebracht, die in der Längsrichtung des Gehäuses angeordnet ist. Diese sorgt dafür, dass die Schutzhülle entsprechend schnell wieder in die Sicherungsstellung gedrückt wird.

Für die Arbeitsstellung wird der Sicherungsschieber per Hand gelöst und die Schutzhülle bis zu einem Tiefenanschlag vorgeschoben. Beim Hervorspringen der Schutzhülle wird der Sicherungsschieber über eine Sicherungsfeder selbsttätig in die Sicherungsstellung zurückgedrückt und blockiert damit die Schutzhülle über der Hakenklinge.

Der Sicherungsschieber ist in der Arbeitsstellung über eine Rastnase gehalten, die in eine Ausnehmung des Gehäuses eingreift. Beim Hervorspringen der Schutzhülle wird der Sicherungsschieber über eine schiefe Ebene gelöst. Die Schutzfeder drückt den Sicherungsschieber dann wieder in die Sicherungsstellung.

Für die Schutzhülle sind in der Arbeitsstellung vorteilhaft mehrere Tiefenanschläge vorgesehen, die durch einen Tiefensteller vorgegeben sind. Diese sind durch verschiedene Ausnehmungen für eine daran befindliche Rastnase im Gehäuse definiert. Über den Tiefensteller wird damit eingestellt, wie tief die Schutzhülle in das Gehäuse zurückdrückbar ist und wie viel der Hakenklinge damit freigegeben wird. Wenn in der Arbeitsstellung nur ein kleiner Teil der Hakenklinge freigegeben wird, wird auch das Verletzungsrisiko geringer.

In den Figuren ist eine Ausführungsform des Klingenschutzes beispielhaft dargestellt. Es zeigen:
Fig. 1 eine Draufsicht auf ein Kabelmesser mit überdeckter Hakenklinge und Tiefensteller;
Fig. 2 eine geöffnete Gehäuseschale mit Sicherungsschieber;
Fig. 3 eine geöffnete Gehäuseschale mit Einzelheiten des Klingenschutzes;
Fig. 4 Details des gesicherten Klingenschutzes;
Fig. 5 Details des freigegebenen Klingenschutzes;
Fig. 6 Einstellung der Anschlagtiefe bei geschnittenem Gehäuse;
Fig. 7 Einstellung der Anschlagtiefe bei geschnittenem Tiefensteller.

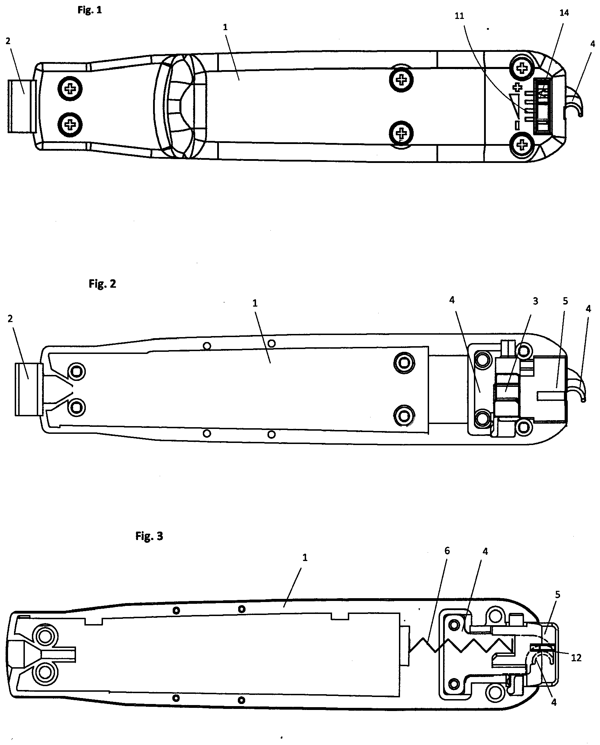

In Fig. 1 ist ein Kabelmesser dargestellt, bei dem an einer Stirnseite des Gehäuses 1 eine Hakenklinge 4 herausragt. An der gegenüberliegenden Stirnseite ist eine weitere Schnittklinge vorhanden, die durch einen Spannbügel 2 verdeckt ist. Für die Tiefeneinstellung des Klingenschutzes ist der Tiefensteller 14 mit den Markierungen 11 vorgesehen

In Fig. 2 und Fig. 3 ist eine offene Schale des Gehäuses 1 mit dem Spannbügel 2 dargestellt, an der die Hakenklinge 4 starr befestigt ist. Die Schutzhülle 5 kann über der Hakenklinge 4 gegen die Federkraft der Schutzfeder 6 gleiten und wird dabei von der Führung 12 linear geführt. Der Sicherungsschieber 3 befindet sich über der Hakenklinge 4 und ist gemäß Fig. 2 eingeschoben, bzw. gemäß Fig. 3 hervorgeschoben.

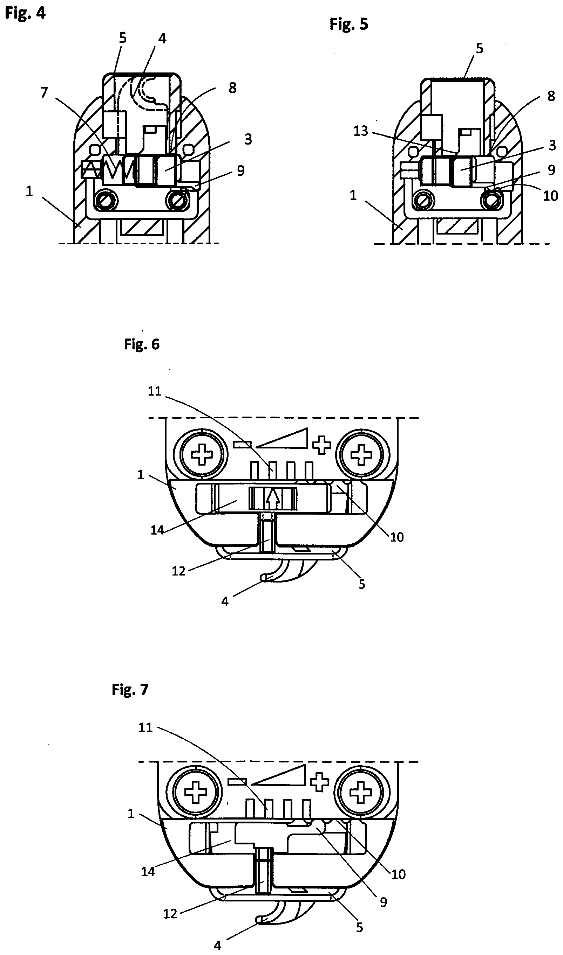

In den Fig. 4 und Fig. 5 sind die Details des Klingenschutzes näher dargestellt. Dabei zeigt Fig. 4 den verriegelten Zustand während in Fig. 5 der freigegebene Zustand dargestellt ist. Die Hakenklinge 4 ist am Gehäuse starr befestigt und wird durch die Schutzhülle 5 überdeckt.
Gemäß Fig. 4 ist der Sicherungsschieber 3 über die Sicherungsfeder 7 in die Sicherungsstellung gedrückt. Dabei wird die Schutzhülle 5 mittels ihrer Riegelkante 8 an dem Sicherungsschieber 3 gesichert. Die Rastnase 9 des Tiefenstellers ist am Ende seiner Bahn im Gehäuses 1 positioniert.
Gemäß Fig. 5 ist der Sicherungsschieber 3 in die freigegebene Stellung zurück gedrückt. Die Riegelkante 8 kann sich frei bewegen. Die Rastnase 9 ist in einer Ausnehmung 10 gehalten. Über die schiefe Ebene 13 wird beim Eindrücken der Schutzhülle 5 der Sicherungsschieber 3 frei gegeben und kann dann von der Sicherungsfeder wieder in die Sicherungsstellung gedrückt werden.

In den Fig. 6 und Fig. 7 ist die Einstellung des Tiefenanschlages näher dargestellt. In dem hier gezeigten Beispiel ist der Tiefensteller 14 auf die zweite Position eingestellt, was durch die Markierung 11 angezeigt wird. Dabei ist die Schutzhülle 5 mittels der Führung 12 nur bis zu einem Teil in das Gehäuse 1 eingeschoben und gibt damit nur einen Teil der Hakenklinge 4 frei.
Gemäß Fig. 6, in der nur das Gehäuse 1 geschnitten ist, zeigt der Pfeil auf dem Tiefensteller 14 auf die entsprechende Markierung 11. Die verschiedenen Ausnehmungen 10 sind zu erkennen.
In Fig. 7, in der auch der Tiefensteller 14 geschnitten ist, ist zu erkennen, dass die Rastnase 9 in die unterschiedlichen Ausnehmungen 10 einrasten kann..

### Bezugszeichen

- 1.: Gehäuse
- 2.: Spannbügel
- 3.: Sicherungsschieber zum Freigeben der Hakenklinge
- 4.: Hakenklinge
- 5.: Schutzhülle
- 6.: Schutzfeder
- 7.: Sicherungsfeder
- 8.: Riegelkante
- 9.: Rastnase
- 10.: Ausnehmung
- 11.: Markierung
- 12.: Führung
- 13.: Schiefe Ebene
- 14.: Tiefensteller

## Patentansprüche

1. Klingenschutz für ein Kabelmesser mit einem Gehäuse (1) als Griff, einer an einer Stirnseite des Gehäuses (1) feststehend am Gehäuse (1) befestigten Hakenklinge (4) und einer in das Gehäuse (1) ein- und ausfahrbaren Schutzhülle (5), welche gegen eine Federkraft in das Gehäuse (1) hinein verschieblich ist und die Hakenklinge (4) im ausgefahrenen Zustand im Wesentlichen vollständig abdeckt, sowie einem Sicherungsschieber (3) als Riegel, welcher in einer Sicherungsstellung eingerastet gehalten werden kann, wobei in der Sicherungsstellung des Sicherungsschiebers (3) die Schutzhülle (5) sichernd über der Hakenklinge (4) gehalten wird,
**dadurch gekennzeichnet, dass**
der Sicherungsschieber (3) in einer Arbeitsstellung eingerastet gehalten werden kann, und bei einem Hervorspringen der Schutzhülle (5) aus dem Gehäuse (1) der Sicherungsschieber (3) über eine Sicherungsfeder (7) selbsttätig aus der Arbeitsstellung in die Sicherungsstellung zurückgedrückt wird.

2. Klingenschutz nach Anspruch 1, **dadurch gekennzeichnet, dass** die Federkraft für die Schutzhülle (5) über eine Schutzfeder (6) aufgebracht wird, die in der Längsrichtung des Gehäuses (1) angeordnet ist.

3. Klingenschutz nach Anspruch 1, **dadurch gekennzeichnet, dass** der Sicherungsschieber (3) in der Arbeitsstellung über eine Rastnase (9) gehalten ist, die in eine Ausnehmung (10) des Gehäuses eingreift und beim Hervorspringen der Schutzhülle (5) über eine schiefe Ebene (13) aus der Ausnehmung (10) herausgedrückt wird.

4. Klingenschutz nach Anspruch 1, **dadurch gekennzeichnet, dass** ein Tiefensteller (14) vorgesehen ist, der einen Tiefenanschlag für die eingeschobene Schutzhülle (5) bildet.

5. Klingenschutz nach Anspruch 4, **dadurch gekennzeichnet, dass** durch den Tiefensteller (14) mehrere Tiefenanschläge für die Schutzhülle (5) in der Arbeitsstellung vorgesehen sind, die durch verschiedene Ausnehmungen (10) für die Rastnase (9) im Gehäuse (1) definiert sind.

## Claims

1. A blade protection for a cable knife with a housing (1) as a handle, a hook blade (4) fixedly attached to the housing (1) at a front side of the housing (1), and a protective sheath (5) which is retractable into and protractable from the housing (1) and which is slidable into the housing (1) against a spring force and substantially completely covers the hook blade (4) in the protracted state, as well as a securing slider (3) as a latch which can be held locked in a securing position, wherein, in the securing position of the securing slider (3), the protective sheath (5) is held securing over the hook blade (4),
**characterised in that**
the securing slider (3) can be held locked in a working position, and when the protective sheath (5) jumps out of the housing (1), the securing slider (3) is self-actingly pushed back from the working position into the securing position via a securing spring (7).

2. The blade protection according to claim 1, **characterised in that** the spring force for the protective sheath (5) is applied via a protective spring (6) arranged in the longitudinal direction of the housing (1).

3. The blade protection according to claim 1, **characterised in that** the securing slider (3) is held in the working position via a locking lug (9) which engages in a recess (10) of the housing and is pushed out of the recess (10) via an inclined plane (13) when the protective sheath (5) jumps out.

4. The blade protection according to claim 1, **characterised in that** a depth adjuster (14) is provided which forms a depth stop for the retracted protective sheath (5).

5. The blade protection according to claim 4, **characterised in that** a plurality of depth stops for the protective sheath (5) in the working position is provided by the depth adjuster (14), the depth stops being defined by various recesses (10) for the locking lug (9) in the housing (1).

## Revendications

1. Protection de lame pour un couteau pour câbles, comportant un boîtier (1) en tant que manche, une lame à crochet (4) reposant sur le boîtier (1), fixée à un côté frontal du boîtier (1) et une enveloppe de protection (5) pouvant être rentrée dans le et sortie du boîtier (1), qui est apte à coulisser contre la tension d'un ressort à l'intérieur du boîtier (1) et à l'état sorti recouvre sensiblement en totalité la lame à crochet (4), ainsi qu'un coulisseau de sécurité (3) en tant que système de verrouillage, qui peut être maintenu enclenché en une position de sécurité, dans la position de sécurité du coulisseau de sécurité (3) l'enveloppe de protection (5) étant maintenue de façon sûre au-dessus de la lame à crochet (4),
**caractérisée en ce que**
le coulisseau de sécurité (3) peut être maintenu enclenché en une position opérationnelle, et lorsque l'enveloppe de protection (5) est éjectée du boîtier (1) le coulisseau de sécurité (3) est automatiquement repoussé de la position opérationnelle en la position de sécurité par un ressort de sécurité (7).

2. Protection de lame selon la revendication 1, **caractérisée en ce que** la tension de ressort pour l'enveloppe de protection (5) est appliquée par un ressort de protection (6) qui est disposé dans le sens longitudinal du boîtier (1).

3. Protection de lame selon la revendication 1, **caractérisée en ce que** le coulisseau de sécurité (3) est maintenu en la position opérationnelle par un ergot d'encliquetage (9) qui s'insère dans un évidement (10) du boîtier et est expulsé de l'évidement (10) sur un plan incliné (13) lors de l'éjection de l'enveloppe de protection (5).

4. Protection de lame selon la revendication 1, **caractérisée en ce qu'**est prévu un régleur de profondeur (14) qui forme une butée de profondeur pour l'enveloppe de protection (5) insérée.

5. Protection de lame selon la revendication 4, **caractérisée en ce qu'**au moyen du régleur de profondeur (14) sont prévues en la position opérationnelle plusieurs butées de profondeur pour l'enveloppe de protection (5), qui sont définies par différents évidements (10) pour l'ergot d'encliquetage (9) dans le boîtier (1).
